# EUROPEAN PATENT SPECIFICATION

(11) **EP 2 814 667 B1**
(45) Date of publication and mention of the grant of the patent: **22.07.2020**
(21) Application number: 13748556.1
(22) Date of filing: 14.02.2013
(51) Int. Cl.: B32B 7/00, B32B 7/12, B32B 9/04, B32B 9/06, B32B 27/06, B32B 27/10, B32B 27/20, B32B 27/26, B32B 27/30, B32B 27/40, B32B 29/00, B32B 29/04, B32B 37/12, C09J 7/00, C09J 175/04

(54) **ADHERING SYSTEMS**
BEFESTIGUNGSSYSTEME
SYSTÈMES ADHÉRENTS

(30) Priority: 14.02.2012 US 201261598791 P; 13.02.2013 US 201313766454
(43) Date of publication of application: 24.12.2014
(73) Proprietor: Magnum Magnetics Corporation, Marietta, OH 45750 (US)
(72) Inventor: RUMMER, Douglas, William, Waterford, OH 45786 (US); BALL, Bernard, F., Sr., Parkersburg, WV 26104 (US)
(74) Representative: Slingsby Partners LLP
(86) International application number: PCT/US2013/026119
(87) International publication number: WO 2013/123173

(56) References cited:
- WO-A1-2008/131822
- US-A1- 2002 160 231
- US-A1- 2009 233 033
- US-A1- 2010 028 667
- US-A1- 2011 171 465
- US-A1- 2011 223 428
- US-A1- 2011 223 428

## Description

### BACKGROUND

This invention relates to adhering systems. More particularly, this invention relates to using such adhering systems in connecting materials.

In the past, manufacturers and users of flexible magnetizable sheets have experienced problems relating to delamination when exposed to heat (like in direct sunlight); yet it is often desirable to utilize flexible magnetized laminate sheets in areas exposed to direct sunlight.

Additionally, manufacturers and users of flexible magnetizable sheets have experienced problems relating to adhesive buildup on blades used to cut flexible magnetizable sheets. Often the cutting blades become warm during the cutting process and the adhesive begins to foul the cutting blades. Once the blades are fouled, the cutting process must be stopped and the blades cleaned; or the adhesive residue will begin to hinder cutting and transfer to the surface of the flexible magnetic sheets.

US 2011/0223428 describes adhering systems for magnetizable laminates to assist preventing delamination of magnetizable laminates exposed to direct sunlight.

### OBJECTS AND FEATURES OF THE INVENTION

A primary object and feature of the present invention is to provide systems overcoming the above-mentioned problems.

It is a further object and feature of the present invention to provide such systems utilizing preferred adhesives and adhering systems.

Another primary object and feature of the present invention is to provide such systems having resistance to heat-induced delamination.

A further object and feature of the present invention is to provide such systems having an adhesive left non-tacky after curing.

It is yet another object and feature of the present invention to provide such systems which, when undergoing cutting procedures, prevent buildup of adhesive materials on cutting blades.

A further primary object and feature of the present invention is to provide such a system that is efficient, inexpensive, and handy. Other objects and features of the present invention will become apparent with reference to the following descriptions.

### SUMMARY OF THE INVENTION

This invention provides a system according to claim 1, relating to preventing delamination of magnetizable laminates exposed to direct sunlight and relating to preventing fouling of cutting blades during cutting of magnetizable laminates, such system comprising: at least one flexible magnetizable laminate comprising at least two layers; wherein such at least two layers comprises at least one magnetizable layer structured and arranged to be capable of magnetization; at least one writeable layer comprising synthetic paper having a thickness of 127 micrometer (5 mil); and at least one adhesive structured and arranged to adhere such at least two layers together; wherein such at least one adhesive is resistant to transfer from such at least one flexible magnetizable laminate to the cutting blades during cutting of such at least one flexible magnetizable laminate; and wherein such at least one flexible magnetizable laminate is resistant to delamination during use in direct sunlight.

Moreover, it provides such a system wherein such at least one adhesive comprises at least one hot-melt adhesive. Additionally, it provides such a system wherein such at least one adhesive comprises at least one reactive hot-melt adhesive. Also, it provides such a system wherein such at least one adhesive comprises at least one virtually-thermosetable hot-melt adhesive. In addition, it provides such a system wherein such at least one adhesive comprises at least one humidity-curable adhesive structured and arranged to cure using humidity. And, it provides such a system wherein such at least one adhesive comprises primarily polyurethane. Further, it provides such a system wherein such at least one adhesive comprises at least about 90% polyurethane. Even further, it provides such a system wherein such at least one adhesive comprises at least 95% polyurethane. Moreover, it provides such a system wherein such at least one adhesive comprises at least one thermoplastic hot-melt adhesive. Additionally, it provides such a system wherein such at least one adhesive comprises a melting point greater than 150 degrees Fahrenheit (about 65 degrees Celsius). Also, it provides such a system wherein such at least one adhesive comprises primarily ethylene vinyl acetate. In addition, it provides such a system wherein such at least one adhesive comprises flexibility at room temperature.

In accordance with another preferred embodiment hereof, this invention provides a method, relating to laminating magnetizable laminates having at least one adhesive preventing delamination of magnetizable laminates exposed to direct sunlight and preventing fouling of cutting blades during cutting of magnetizable laminates, such method comprising the steps of: obtaining at least two layers of flexible material; wherein such at least two layers comprises at least one magnetizable layer structured and arranged to be capable of magnetization; and laminating such at least two layers of flexible material with at least one adhesive to form at least one flexible magnetizable laminate; and curing such at least one adhesive to form a virtual thermoset; wherein such at least one adhesive is resistant to transfer from such at least one flexible magnetizable laminate to the cutting blades during cutting of such at least one flexible magnetizable laminate; and wherein such at least one flexible magnetizable laminate is resistant to delamination on exposure to direct sunlight, during use.

In accordance with another preferred embodiment hereof, this invention provides a system, relating to preventing delamination of magnetizable laminates exposed to direct sunlight and relating to preventing fouling of cutting blades during cutting of magnetizable laminates, such system comprising: at least one magnetization accepter structured and arranged to accept magnetization; at least one indicia accepter structured and arranged to accept indicia; and at least one laminator structured and arranged to laminate such at least one magnetization accepter and such at least one indicia accepter to form at least one flexible magnetizable laminate; wherein such at least one laminator is resistant to transfer from such at least one flexible magnetizable laminate to the cutting blades during cutting of such at least one flexible magnetizable laminate; and wherein such at least one flexible magnetizable laminate is resistant to delamination during use in direct sunlight. And, it provides such a system wherein such at least one laminator comprises at least one hot-melt adhesive. Further, it provides such a system wherein such at least one laminator comprises at least one reactive hot-melt adhesive. Even further, it provides such a system wherein such at least one laminator comprises at least one virtually-thermosetable hot-melt adhesive. Moreover, it provides such a system wherein such at least one laminator comprises at least one humidity-curable adhesive structured and arranged to cure using humidity. Additionally, it provides such a system wherein such at least one laminator comprises primarily polyurethane. Also, it provides such a system wherein such at least one laminator comprises at least about 90% polyurethane. In addition, it provides such a system wherein such at least one laminator comprises at least about 95% polyurethane. And, it provides such a system wherein such at least one laminator comprises at least one thermoplastic hot-melt adhesive. Further, it provides such a system wherein such at least one laminator comprises a melting point greater than 150 degrees Fahrenheit (about 65 degrees Celsius). Even further, it provides such a system wherein such at least one laminator comprises primarily ethylene vinyl acetate. Even further, it provides such a system wherein such at least one laminator comprises flexibility at room temperature.

In accordance with another preferred embodiment hereof, this invention provides a system, relating to preventing delamination of magnetizable laminates exposed to direct sunlight and relating to preventing fouling of cutting blades during cutting of magnetizable laminates, such system comprising: magnetization accepter means for accepting magnetization; indicia accepter means for accepting indicia; and laminator means for laminating such magnetization accepter means and such indicia accepter means to form at least one flexible magnetizable laminate; wherein such laminator means is resistant to transfer from such at least one flexible magnetizable laminate to the cutting blades during cutting of such at least one flexible magnetizable laminate; and wherein such at least one flexible magnetizable laminate is resistant to delamination during use in direct sunlight. In accordance with preferred embodiments hereof, this invention provides for each and every novel feature, element, combination, step and/or method disclosed or suggested by this patent application.

According to another preferred embodiment of the present invention, this invention provides each and every novel feature, element, combination, step and/or method disclosed or suggested by this patent application.

### BRIEF DESCRIPTION OF THE DRAWINGS

FIG. 1 shows a cross-sectional view, of a flexible magnetic sheet, illustrating a preferred embodiment of the present invention.
FIG. 2 shows a diagrammatic view illustrating a preferred manufacturing process of the preferred embodiment of FIG. 1.
FIG. 3 shows a flowchart illustrating the preferred manufacturing process of FIG. 2.
FIG. 4 shows a diagrammatic view illustrating a preferred coating stage of an alternately preferred manufacturing process of the preferred embodiment of FIG. 1.
FIG. 5 shows a diagrammatic view illustrating a preferred adhering stage of the alternately preferred manufacturing process of the preferred embodiment of FIG. 1.
FIG. 6 shows a flowchart illustrating an alternately preferred manufacturing process of FIG. 4 and FIG. 5.

### DETAILED DESCRIPTION OF THE BEST MODES AND PREFERRED EMBODIMENTS OF THE INVENTION

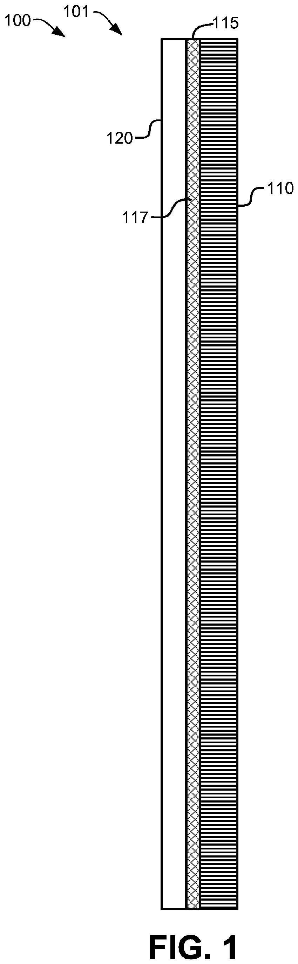

FIG. 1 shows a cross-sectional view of a flexible magnetic sheet illustrating a preferred embodiment of the present invention. FIG. 1 shows adhering system **100.** Adhering system **100** preferably comprises flexible magnetic sheet **101**, as shown. Flexible magnetic sheet **101** preferably comprises at least one magnetizable layer **110**, at least one adhesive layer **115**, and at least one writeable layer **120**, as shown. Magnetizable layer **110** preferably comprises magnetizable material. Adhesive layer **115** preferably connects magnetizable layer **110** with writeable layer **120.** Writeable layer **120** is preferably capable of holding indicia, preferably obtained through printing or alternately preferably obtained through writing.

Magnetizable layer **110** preferably comprises at least one magnetizable component (preferably ferrite particles) and preferably at least one binder. The at least one magnetizable component and the at least one binder are preferably homogeneously blended and shaped to form magnetizable layer **110** (at least herein embodying wherein said at least two layers comprises at least one magnetizable layer structured and arranged to be capable of magnetization). Magnetizable layer **110** is preferably flexible, preferably from flexibility properties of the at least one binder, and is preferably magnetizable, so as to be useful in magnetically adhering to a magnetically receptive surface, preferably from ferromagnetic properties of the at least one magnetizable component. Magnetizable layer **110** is preferably smooth so that no surface treatment is required in adhering magnetizable layer **110** to writeable layer **120.** Under appropriate circumstances, those of ordinary skill in the art will now appreciate that, under appropriate circumstances, considering such issues as cost, future technologies, etc., other arrangements of layers, such as, for example, a non-magnetic layer, layers utilizing other properties creating magnetic-like attraction, etc., may suffice.

Writeable layer **120** comprises synthetic paper having a thickness of 127 micrometer (5 mil) and is preferably capable of being printed on, alternately preferably capable of being written on. Writeable layer **120** preferably comprises bi-axially oriented polypropylene film ("BOPP"), alternately preferably vinyl, alternately preferably non-top-coated vinyl, alternately preferably polypropylene. Such synthetic paper preferably comprises waterproof synthetic paper. Such synthetic paper preferably comprises YUPO® synthetic paper (commercially available from Yupo Corporation America, 800 Yupo Court, Chesapeake , VA 23320, www.yupousa.com), alternately preferably Polylith® synthetic paper (commercially available from Granwell Products, 185 Fairfield Ave, #2B, West Caldwell, NJ 07006, USA, www.granwell.com), alternately preferably HOP-SYN® synthetic paper (commercially available from Hop Industries Corporation, 1251 Valley Brook Avenue, Lyndhurst, New Jersey 07071 , www.hopindustries.com). Such YUPO® synthetic paper preferably comprises YUPO® Blue- Synthetic Paper Indigo Printable, alternately preferably YUPO® FEB 130 Synthetic Paper Offset Printable preferably 129 micrometer (5.1 mil) thick, alternately preferably SPG 080 Synthetic Paper Indigo Printable, alternately preferably SPG 080 Synthetic Paper with solvent ink jet printable coating one side, alternately preferably FPU 150 Synthetic Paper UV Printable preferably 150 micrometer (5.9 mil) thick, alternately preferably SPG080 Synthetic Paper Indigo Printable preferably 127 micrometer (5 mil) thick. Such HOP-SYN® synthetic paper preferably comprises HOP-SYN® Synthetic Paper Matte. Such bi-axially oriented polypropylene film preferably comprises 66LT440 BOPP (coated one side) (commercially available from ExxonMobil Chemical Company, 13501 Katy Freeway, Houston, TX 77079-1398, www.exxonmobilchemical.com).

Magnetizable sheet **101** (at least embodying herein at least one flexible magnetizable laminate comprising at least two layers) is preferably formed into a roll or alternately preferably cut into specific sizes based on customer desire.

Upon reading the teachings of this specification, those of ordinary skill in the art will now appreciate that, under appropriate circumstances, other arrangements of the sheet, such as, for example, sandpaper layer connected to magnetizable layer; cork layer connected to magnetizable layer; wood layer connected to magnetizable layer; decorative print layer connected to magnetizable layer; wallpaper connected to magnetizable layer; two magnetizable layers connected to one another with magnetic poles in a "repulsive" orientation; two magnetizable layers connected to one another with magnetic poles in an "attractive" orientation; two magnetizable layers connected to one another with "opposite" indicia on opposing sides (*e.g.*, On/Off; Open/Closed, Stop/Go, etc.), etc., may suffice.

Adhesive layer **115** (at least embodying herein at least one adhesive structured and arranged to adhere said at least two layers together) preferably comprises adhesive **117** bonding magnetizable layer **110** with writeable layer **120.** Adhesive **117** preferably comprises at least one hot-melt adhesive, preferably at least one reactive hot-melt adhesive, preferably at least one virtually-thermosetable hot-melt adhesive. Adhesive **117** preferably comprises polyurethane, alternately preferably ethylene vinyl acetate (a hot-melt adhesive), alternately preferably moisture-curing urethane adhesive. Upon reading the teachings of this specification, those skilled in the art will now appreciate that, under appropriate circumstances, considering such issues as cost, future technologies, available materials, etc., other adhesives, such as, for example, other polymers, dissipating chemical reagents, fusing cross-linking materials, etc., may suffice.

Adhesive **117** preferably bonds destructively to magnetizable layer **110** and writeable layer **120**, meaning that once adhesive **117** is cured, the layers cannot be removed mechanically (by peeling, delamination, etc.) without mechanical destruction. Further, applying normal heat of about 110 degrees Fahrenheit (about 43 degrees Celsius) preferably does not interfere with the bonding qualities of adhesive **117.** Further, adhesive layer **115** preferably is non-tacky once bonded to magnetizable layer **110** and writeable layer **120.** Adhesive **117** preferably is smoothly applied which provides for a quality print processing. Flexible magnetic sheet **101** preferably has no observable bumps, ridges, or streaks in adhesive layer **115**; so writeable layer **120** is preferably likewise smooth for printing or writing.

Adhesive **117**, when comprising polyurethane, is preferably durable, cross-link reacted, and cannot be reactivated after curing. The cross-linking is preferably non-reversible as occurs with a thermoset polymer. Additionally, adhesive **117** is preferably heat resistant to resist delamination in high temperatures, while also preferably remaining flexible at low temperatures. The Applicant has determined through testing that polyurethane remains flexible in cold temperatures. For example, at freezing (32 degrees Fahrenheit, 0 degrees Celsius), the preferred polyurethane adhesives remain flexible (do not observably crack, distort, or bubble). Adhesive **117** preferably is solid, preferably not solvent based, and preferably comprises no volatile organic compounds. Adhesive **117** preferably is recyclable.

A preferred polyurethane adhesive for adhesive layer **115** comprises PURMELT® R-246C made available by Henkel Corporation of Elgin, IL.

PURMELT® R-246C comprises about 95 percent to about 99 percent of a polyurethane prepolymer and about 1-3 percent of Methylene bisphenyl isocyanate (CAS No. 101-68-8). The following physical and chemical properties belong to PURMELT® R-246C:
- Physical state: Solid
- Color: Off-white
- Odor: None
- Odor Threshold: 0.4 ppm (4,4'-MDI)
- Vapor pressure: < 0.0001 mmHg @20°C (68° F) For MDI
- pH: Not applicable
- Boiling point/range: Not available
- Melting point/range: 120°C (250°F)
- Specific gravity: 1.1
- Vapor density: Not available
- Evaporation rate: Not applicable
- Solubility in water: Insoluble. Reacts slowly with water to liberate carbon dioxide gas.
- Partition coefficient (n-octanol/water): Not available
- VOC content: 0 g/L

An alternately preferred polyurethane adhesive is PURMELT® R-246CLV made available by Henkel Corporation of Elgin, IL. PURMELT® R-246CLV has a viscosity of about 18,000 centipoise at about 180 degrees Fahrenheit (about 82 degrees Celsius) and a humidity curing mechanism. PURMELT® R-246CLV is a one-component polyurethane reactive hot melt adhesive. PURMELT® R-246CLV cures through moisture to form a tough, strong, and virtually thermoset polymer. Unlike many thermoset polymers, a virtual thermoset polymer retains flexibility and has a melting point lower than the decomposition temperature, though higher that before curing. Thus, Adhesive **117**, comprising a virtual thermoset polymer, preferably bonds using cross-linking, preferably increasing the melting point, but preferably maintains flexibility and recyclability. Further, another alternately preferable adhesive is Supergrip 2000™ H0005-03A by Bostik™ companies, a solvent-free, one component, moisture curing urethane adhesive which, once dispensed will react with ambient moisture to yield a cross-linked virtual thermoset adhesive.

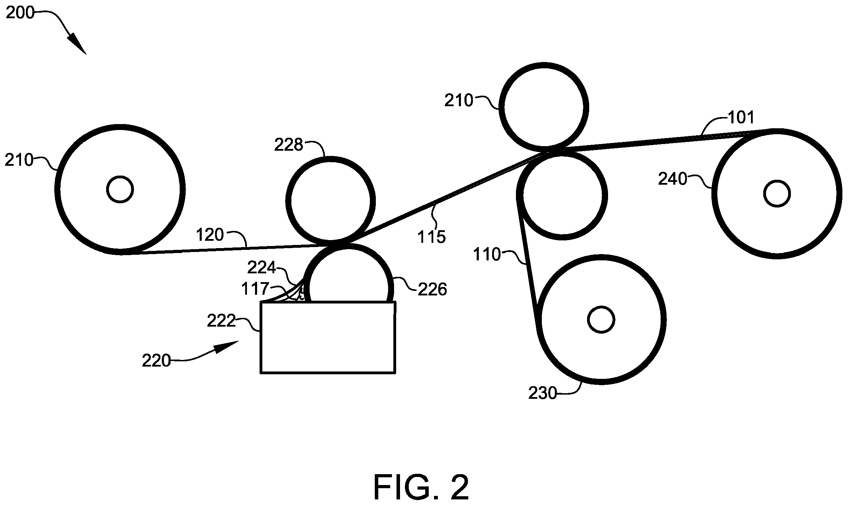

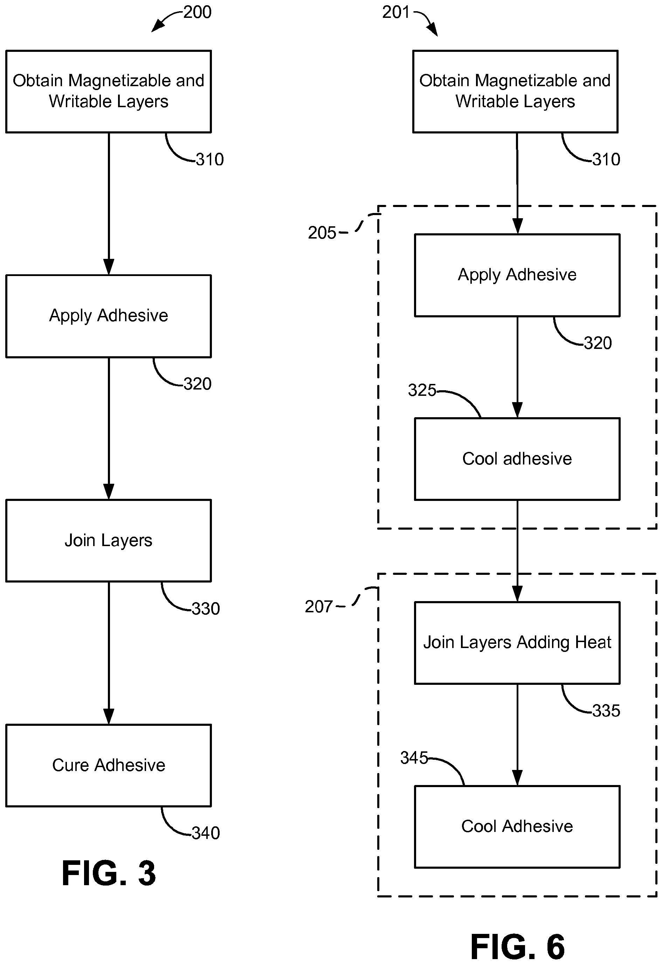

FIG. 2 shows a diagrammatic view illustrating a preferred manufacturing process **200** of the preferred embodiment of FIG. 1. FIG. 3 shows a flowchart illustrating preferred manufacturing process **200** of FIG. 2. To construct magnetizable sheet **101**, manufacturing process **200** begins with the step of Obtaining Magnetizable Layer and Writeable Layer **310** (at least embodying herein obtaining at least two layers of flexible material), in which magnetizable layer **110** and writeable layer **120** are obtained preferably as rolls of material (magnetizable-layer roll **230** and writeable-layer roll **210**). Upon reading the teachings of this specification, those skilled in the art will now appreciate that, under appropriate circumstances, considering such issues as cost, product demand, future technologies, etc., other layer combinations, such as, for example, sandpaper layer connected to magnetizable layer; cork layer connected to magnetizable layer; wood layer connected to magnetizable layer; decorative print layer connected to magnetizable layer; wallpaper connected to magnetizable layer; two magnetizable layers connected to one another with magnetic poles in a "repulsive" orientation; two magnetizable layers connected to one another with magnetic poles in an "attractive" orientation; two magnetizable layers connected to one another with "opposite" indicia on opposing sides (e.g., On/Off; Open/Closed, Stop/Go, etc.), etc., may suffice.

In step Apply Adhesive **320**, preferably, an increased temperature, preferably about 250 degrees Fahrenheit (about 121 degrees Celsius), is applied to a pre-selected amount of adhesive **117.** Thus prepared, adhesive **117** is subsequently applied to a coating machine **220**, preferably in a coating bath **222.** Preferably, coating machine comprises a Gravure coater (as shown in FIG. 2), alternately preferably a roll coater, alternately preferably a slot die coater. Upon reading the teachings of this specification, those skilled in the art will now appreciate that, under appropriate circumstances, considering such issues as cost, available materials, future technologies, etc., other coating devices, such as, for example, Meyer rod coaters, blade-gap coaters, reverse-roll coaters, air-knife coaters, etc., may suffice.

Engraved roller **226**, of coating machine **220**, preferably collects adhesive from coating bath **222** and preferably applies adhesive **117** to writeable layer **120.** Preferably, at least one doctor blade **224** wipes off excess adhesive from engraved roller **226** prior to application to writeable **120.** At least one pressure roller **228** applies pressure to assist adhesion of adhesive **117** to writeable layer **120** from engraved roller **226.** Coating machine **220** preferably coats adhesive **117** in a thin layer (adhesive layer **115**) so that magnetizable layer **110** and writeable layer **120** will sandwich adhesive layer **115.** Adhesive layer **115** preferably comprises a thickness of about 1.5 micrometer to about 4 micrometer (about 0.6 mil to about 1.5 mil). Upon reading the teachings of this specification, those skilled in the art will now appreciate that, under appropriate circumstances, considering such issues as cost, available materials, coating methods, etc., other thicknesses of adhesive may suffice.

Preferably the viscosity of adhesive **117** is kept at a pre-selected level, preferably to apply an even layer. PURMELT® R-246C has a viscosity of about 13,000 centipoise at about 250 degrees Fahrenheit (about 121 degrees Celsius). Under appropriate circumstances, such as to achieve a thinner coat weight, the temperature applied to the adhesive may be increased to "thin" the coat weight. Preferably, coating machine 220 comprises a Gravure coater, as shown in FIG. 2, alternately preferably a reverse Gravure coater, so that a consistent coat weight may be preferably deposited onto the desired layer(s). The Gravure coating structure (engraved roller **226**) comprises engravings having a pre-determined depth so as to deposit a controlled coat weight onto a desired layer. Engraved roller **226** preferably comprises at least one quad pattern, preferably a 55 by 55 quad pattern, alternately preferably a 96 by 96 quad pattern. Alternately, engraved roller **226** preferably comprises at least one tri-helical pattern. Alternately, engraved roller **226** preferably comprises at least one hex channel pattern, preferably a 45 degree hex channel pattern. For most printing applications, adhesive layer **115** has a preferred thickness of about 1.5 micrometer to about 4 micrometer (about 0.6 mil to about 1.5 mil).

After applying adhesive **117** forming adhesive layer **115**, magnetizable layer **110** is preferably joined to writeable layer **120** with adhesive layer **115** between to form an adhesive bond, in step Join Layers **330.** Adhesive layer **115** preferably is still viscous to promote complete bonding, during step Join Layers **330.** The resulting bound and layered material (magnetizable sheet **101**) preferably forms as all three layers (magnetizable layer **110**, adhesive layer **115** and writeable layer **120**) are pressed together through pressure rollers **210.** Magnetizable sheet **101** preferably is rolled into magnetizable sheet roll **240** ready for final curing. The steps of Apply Adhesive **320** and Join Layers **330** at least embody herein laminating such at least two layers of flexible material with at least one adhesive to form at least one flexible magnetizable laminate.

After joining the layers, magnetizable sheet **101** is preferably cured, in step Cure Adhesive **340** (at least embodying herein curing such at least one adhesive to form a virtual thermoset). Curing of adhesive preferably uses humidity. Curing time is preferably dependent on humidity. Preferably, a cure time of 24 hours is preferred in most ambient humidity conditions (about 28 percent to about 70 percent relative humidity). Increasing the humidity level preferably decreases the time needed to cure the adhesive depending on the coat weight applied to the layers. Preferably, additional humidity may be preferably introduced by running the curing product though a humidified chamber, alternately preferably by misting the curing product, or alternately preferably curing the product in a humidity controlled room. Upon reading the teachings of this specification, those skilled in the art will now appreciate that, under appropriate circumstances, considering such issues as available materials, future technologies, costs, etc., other curing methods, such as, for example, electromagnetic radiation, temperature flux, vacuum, atmospheric adjustments, etc., may suffice.

As PURMELT® R-246C cures, it forms a virtually thermoset polymer. Applicant's testing has shown that the PURMELT® R-246C does not lose its thermoset polymer qualities at about 110 degrees Fahrenheit, yet remains flexible.

Applicant's subjected a sample of magnetizable sheet **101** with PURMELT® R-246C and Exxon Mobile Indigo Printable BOPP 970 LT-447 to a "peel test", more specifically a 90-degree peel at 38 millimeter/minute test (about 12 inches/minute). The peel test was performed with a CHEMINSTRUMENTS Adhesion Release Tester Model No. AR-1500. The adhesive coat weight was 0.001 inches. An inability to peel the magnetizable sheet from the Exxon Mobile Indigo Printable BOPP 970 LT-447 was observed.

Further, Applicant subjected a sample of magnetizable sheet with Acucote P2000 pressure sensitive adhesive made available by Acucote Inc. of Graham, North Carolina and Exxon Mobile Indigo printable BOPP (70 LT-447) to the same above peel test. Adhesive failure (i.e., the adhesive was removed from the substrate cleanly) and adhesive transfer (i.e., the adhesive transferred from the face stock to the substrate) were both observed.

In testing, Applicant has documented the lack of "build up" of adhesive **117** on a guillotine cutter blade. A blade test procedure was performed by cutting sheets having a magnetizable layer, a layer of PURMELT® R-246C, and a laminate layer into sheets sized about 12 inches by about 18 inches. One hundred sheets were heated to about 110 degrees Fahrenheit. The 100 heated sheets were cut 110 times with a guillotine paper cutter (such as manufactured by POLAR). Photographs of the cutting blades were taken every 20 cuts. The photographs show no observable adhesive residue on the blade after making 110 cuts. On the other hand, Applicant has observed that a pressure sensitive adhesive utilized in place of PURMELT® R-246C subjected to the above test will typically observably gather on the knife blade and be transferred to the material being cut after 20 cuts. This property of magnetizable sheets **101** is important in that die cut blades become warm during use and pressure sensitive adhesives "gum" up or foul the blades. This arrangement at least herein embodies wherein said at least one adhesive is resistant to transfer from said at least one flexible magnetizable laminate to the cutting blades during cutting of said at least one flexible magnetizable laminate; and this arrangement at least herein embodies wherein said at least one laminator is resistant to transfer from said at least one flexible magnetizable laminate to the cutting blades during cutting of said at least one flexible magnetizable laminate; and this arrangement at least herein embodies wherein said laminator means is resistant to transfer from said at least one flexible magnetizable laminate to the cutting blades during cutting of said at least one flexible magnetizable laminate.

In summary, Applicant prefers utilization of adhesive **117**, preferably comprising at least one hot-melt adhesive, preferably at least one reactive hot-melt adhesive, preferably at least one virtually-thermosetable hot-melt adhesive, preferably primarily polyurethane, preferably at least about 90% polyurethane, preferably at least about 95% polyurethane, preferably PURMELT® R-246C. Applicant further prefers adhesive **117** comprising polyurethane curable by humidity, preferably raising the overall melting point while preferably remaining flexible at room temperature. In addition, Applicant prefers adhesive **117** that, after being cured, will not delaminate while exposed to direct sunlight or high temperature environments (above about 100 degrees Fahrenheit or above about 38 degrees Celsius), during use (this arrangement at least herein embodying wherein said at least one flexible magnetizable laminate is resistant to delamination during use in direct sunlight). Further Applicant prefers adhesive **117** that, after being cured, is not tacky when exposed to normal cutting-machine operational temperatures (about 110 degrees Fahrenheit or about 43 degrees Celsius), so as to transfer essentially no residue to cutting blades.

Upon further testing, Applicant more preferably utilizes reverse Gravure coating having a 96 by 96 quad pattern. Applicant found that bonds were considerably better with this pattern and technique. All tested substrates showed complete destructive bonding within 72 hours of application.

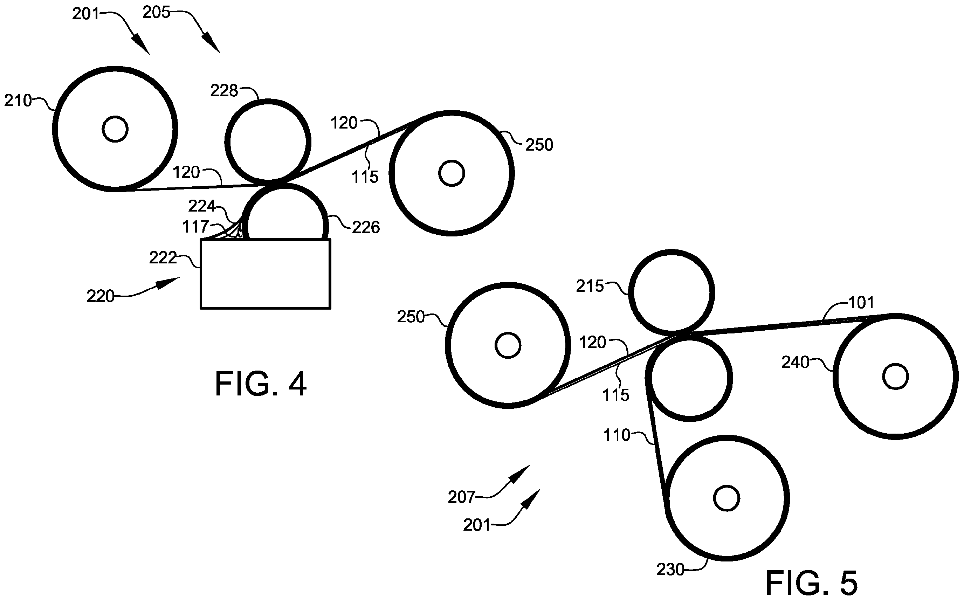

FIG. 4 shows a diagrammatic view illustrating a preferred coating stage **205** of an alternately preferred manufacturing process **201** of the preferred embodiment of FIG. 1. FIG. 5 shows a diagrammatic view illustrating a preferred adhering stage **207** of alternately preferred manufacturing process **201** of the preferred embodiment of FIG. 1. FIG. 6 shows a flowchart illustrating alternately preferred manufacturing process **201** of FIG. 4 and FIG. 5. An alternately preferred adhesive **117**, comprising ethylene vinyl acetate, preferably comprises HOT MELT NO. C53-133 PLW by Cattie Adhesive Solutions of Quakertown, PA. HOT MELT NO. C53-133 PLW is a synthetic resin, having a white amber color, viscosity of about 1400-1900 centipoise at about 225 degrees Fahrenheit (about 107 degrees Celsius), viscosity of about 1100-1600 centipoise at about 250 degrees Fahrenheit (about 121 degrees Celsius), viscosity of about 400-600 at 300 degrees Fahrenheit (about 150 degrees Celsius), a softening point (ring and ball) at 160 degrees Fahrenheit (about 71 degrees Celsius), a speed of set of medium/fast, and no noticeable adverse effects after 100 hours at 350 degrees Fahrenheit (about 177 degrees Celsius). HOT MELT NO. C53-133 PLW is a thermoplastic.

In applying the HOT MELT NO. C53-133 PLW, manufacturing process **201was** preferred. Manufacturing process **201** preferably comprises step Obtaining Magnetizable Layer and Writeable Layer **310** like manufacturing process **200.** Manufacturing process **201** further comprises 2 stages, first, coating stage **205**, as shown in FIG. 4, and second, adhering stage **207**, as shown in FIG. 5.

In coating stage **205**, first, adhesive **117**, comprising HOT MELT NO. C53-133 PLW, is applied to writeable layer **120**, in step Apply Adhesive **320** (detailed above in manufacturing process **200**). After applying adhesive **117** to form adhesive layer **115**, adhesive layer **115** is allowed to cool, in step Cool Adhesive **325.** Upon cooling, and thus inactivation of adhesive properties of adhesive layer **115**, the combined material of writeable layer **120** and adhesive layer **115** is then wound onto a core to form coated-material roll **250**, as shown in FIG. 4, completing coating stage **205** of manufacturing process **201.**

A typical application temperature of HOT MELT NO. C53-133 PLW ranges between about 220 to about 300 degrees Fahrenheit (about 104 degrees Celsius to about 150 degrees Celsius). Preferably, HOT MELT NO. C53-133 PLW is applied at about **250** degrees Fahrenheit preferably using a slot die coating technique, alternately preferably using a Gravure coater, as shown in FIG. 4. Upon reading the teachings of this specification, those skilled in the art will now appreciate that, under appropriate circumstances, considering such issues as cost, available materials, future technologies, etc., other coating devices, such as, for example, Meyer rod coaters, blade-gap coaters, reverse-roll coaters, air-knife coaters, etc., may suffice.

In adhering stage **207**, coated material from coated-material roll **250** and magnetizable layer **110** are then subsequently run together over at least one heated roller **215** (to reactivate adhesive **117**) to bond the writeable layer **120** (at least embodying herein at least one indicia accepter structured and arranged to accept indicia; and at least embodying herein indicia accepter means for accepting indicia) to magnetizable layer **110** (at least embodying herein at least one magnetization accepter structured and arranged to accept magnetization; and at least embodying herein magnetization accepter means for accepting magnetization) with adhesive layer **115** sandwiched between, in step Join Layers Adding Heat **335.** After being thus joined, magnetizable sheet **101** forms. Magnetizable sheet **101** is preferably allowed to cool in step Cool Adhesive **345.** In manufacturing process **201**, magnetizable sheet **101** is not cured further and adhesive **117** (at least embodying herein at least one laminator structured and arranged to laminate said at least one magnetization accepter and said at least one indicia accepter to form at least one flexible magnetizable laminate; and at least embodying herein laminator means for laminating said magnetization accepter means and said indicia accepter means to form at least one flexible magnetizable laminate) preferably stays as a thermoplastic, however adhesive **117**, comprising HOT MELT NO. C53-133 PLW, has a high melting point so preferably prevents delamination except in temperatures unlikely to occur in normal use (above 220 degrees Fahrenheit or about 104 degrees Celsius). After cooling, magnetizable sheet **101** is preferably rolled into magnetizable sheet roll **240.**

In summary, Applicant alternately prefers utilization of adhesive **117**, preferably comprising at least one hot-melt adhesive, preferably at least one thermoplastic hot-melt adhesive, preferably primarily ethylene vinyl acetate, preferably HOT MELT NO. C53-133 PLW. In this alternate preference, Applicant further prefers adhesive **117** comprising ethylene vinyl acetate with a melting point of greater than 150 degrees Fahrenheit (about 65 degrees Celsius), while preferably remaining flexible at room temperature. In addition, in this alternate preference, Applicant prefers adhesive **117** that will not delaminate in direct sunlight or high temperature environments (above about 100 degrees Fahrenheit or about 38 degrees Celsius), during use. Further, in this alternate preference, Applicant prefers adhesive **117** that is not tacky when exposed to normal cutting-machine operational temperatures (about 110 degrees Fahrenheit or about 43 degrees Celsius), so as to transfer essentially no residue to cutting blades.

Although applicant has described applicant's preferred embodiments of this invention using metric standardized units, such measurements have been provided only for the convenience of the reader and should not be read as controlling or limiting. Instead, the reader should interpret any measurements provided in English standardized units as controlling. Any measurements provided in metric standardized units were merely derived through strict mechanical coding, with all converted values rounded to reasonable significant figures.

Although applicant has described applicant's preferred embodiments of this invention, it will be understood that the broadest scope of this invention includes modifications such as diverse shapes, sizes, and materials. Such scope is limited only by the below claims as read in connection with the above specification. Further, many other advantages of applicant's invention will be apparent to those skilled in the art from the above descriptions and the below claims.

## Claims

1. A system, relating to preventing delamination of magnetizable laminates exposed to direct sunlight and relating to preventing fouling of cutting blades during cutting of said magnetizable laminates, said system comprising:
at least one flexible magnetizable laminate comprising at least two layers, said at least two layers comprises:
at least one magnetizable layer structured and arranged to be capable of magnetization,
at least one writeable layer comprising synthetic paper having a thickness of 127 micrometer (5 mil), and
at least one adhesive structured and arranged to destructively bond said at least two layers together and being resistant to transfer from said at least one flexible magnetizable laminate to the said cutting blades during cutting of said at least one flexible magnetizable laminate; wherein the at least one flexible magnetizable laminate is resistant to delamination during use in direct sunlight.

2. The system according to Claim 1 wherein said at least one adhesive comprises at least one humidity-curable adhesive structured and arranged to cure using humidity.

3. The system according to Claim 1 wherein said at least one adhesive comprises primarily polyurethane.

4. The system according to Claim 1 wherein said at least one adhesive comprises at least 95% polyurethane prepolymer.

5. The system according to Claim 1 wherein said at least one adhesive comprises at least 95% polyurethane.

6. The system according to Claim 1 wherein said at least one adhesive comprises a melting point greater than 65 degrees Celsius.

7. The system according to Claim 1 wherein said at least one adhesive comprises primarily ethylene vinyl acetate.

8. The system according to Claim 1 wherein said at least one adhesive exhibits flexibility at room temperature.

9. The system according to Claim 1 wherein said synthetic paper is waterproof synthetic paper.

10. The system according to Claim 1, wherein said at least one adhesive is solvent-free.

11. The system according to Claim 1 wherein said at least one adhesive comprises at least one hot-melt adhesive.

12. The system according to Claim 11 wherein said at least one adhesive comprises at least one reactive hot-melt adhesive.

13. The system according to Claim 12 wherein said at least one adhesive comprises at least one virtual thermoset polymer.

14. A method, relating to laminating magnetizable laminates having at least one adhesive preventing delamination of said magnetizable laminates exposed to direct sunlight and preventing fouling of cutting blades during cutting of said magnetizable laminates, said method comprising the steps of:
obtaining at least two layers of flexible material, said at least two layers comprising:
at least one magnetizable layer structured and arranged to be capable of magnetization; and
at least one writeable layer comprising synthetic paper having a thickness of 127 micrometer (5 mil);
laminating said at least two layers of flexible material with at least one adhesive to destructively bond said at least two layers of flexible material together and form at least one flexible magnetizable laminate; and
after laminating said at least two layers of flexible material together, curing said at least one adhesive;
wherein said at least one adhesive is resistant to transfer from said at least one flexible magnetizable laminate to the cutting blades during cutting of said at least one flexible magnetizable laminate; and
wherein such at least one flexible magnetizable laminate is resistant to delamination on exposure to direct sunlight, during use.

## Patentansprüche

1. System zum Verhindern einer Delaminierung von magnetisierbaren Laminaten, die direkter Sonneneinstrahlung ausgesetzt sind, und zum Verhindern einer Verschmutzung von Schneidklingen während des Schneidens der magnetisierbaren Laminate, wobei das System Folgendes umfasst:
mindestens ein flexibles magnetisierbares Laminat, umfassend mindestens zwei Schichten, wobei die mindestens zwei Schichten umfassen:
mindestens eine magnetisierbare Schicht, so strukturiert und angeordnet, dass diese magnetisierbar ist,
mindestens eine beschreibbare Schicht, umfassend synthetisches Papier mit einer Dicke von 127 Mikrometer (5 mil), und
mindestens einen Klebstoff, so strukturiert und angeordnet, dass dieser die mindestens zwei Schichten destruktiv miteinander verbindet, und der beständig gegen ein Übertragen von dem mindestens einen flexiblen, magnetisierbaren Laminat auf die Schneidklingen während des Schneidens des mindestens einen flexiblen, magnetisierbaren Laminats ist; wobei das mindestens eine flexible, magnetisierbare Laminat beständig gegen eine Delaminierung während der Verwendung bei direkter Sonneneinstrahlung ist.

2. System nach Anspruch 1, wobei der mindestens eine Klebstoff mindestens einen feuchtigkeitshärtbaren Klebstoff umfasst, so strukturiert und angeordnet, dass dieser unter Verwendung von Feuchtigkeit aushärtet.

3. System nach Anspruch 1, wobei der mindestens eine Klebstoff überwiegend Polyurethan umfasst.

4. System nach Anspruch 1, wobei der mindestens eine Klebstoff mindestens 95 % Polyurethan-Prepolymer umfasst.

5. System nach Anspruch 1, wobei der mindestens eine Klebstoff mindestens 95 % Polyurethan umfasst.

6. System nach Anspruch 1, wobei der mindestens eine Klebstoff einen Schmelzpunkt von mehr als 65 Grad Celsius umfasst.

7. System nach Anspruch 1, wobei der mindestens eine Klebstoff überwiegend Ethylen-Vinylacetat umfasst.

8. System nach Anspruch 1, wobei der mindestens eine Klebstoff Flexibilität bei Raumtemperatur zeigt.

9. System nach Anspruch 1, wobei das synthetische Papier wasserfestes synthetisches Papier ist.

10. System nach Anspruch 1, wobei der mindestens eine Klebstoff lösungsmittelfrei ist.

11. System nach Anspruch 1, wobei der mindestens eine Klebstoff mindestens einen Schmelzklebstoff umfasst.

12. System nach Anspruch 11, wobei der mindestens eine Klebstoff mindestens einen reaktiven Schmelzklebstoff umfasst.

13. System nach Anspruch 12, wobei der mindestens eine Klebstoff mindestens ein virtuell duroplastisches Polymer umfasst.

14. Verfahren zum Laminieren von magnetisierbaren Laminaten mit mindestens einem Klebstoff, der eine Delaminierung der magnetisierbaren Laminate, die direkter Sonneneinstrahlung ausgesetzt sind, verhindert und eine Verschmutzung der Schneidklingen während des Schneidens der magnetisierbaren Laminate verhindert, wobei das Verfahren die folgenden Schritte umfasst:
Erhalten von mindestens zwei Schichten eines flexiblen Materials, wobei die mindestens zwei Schichten Folgendes umfassen:
mindestens eine magnetisierbare Schicht, so strukturiert und angeordnet, dass diese magnetisierbar ist; und
mindestens eine beschreibbare Schicht, die synthetisches Papier mit einer Dicke von 127 Mikrometer (5 mil) umfasst;
Laminieren der mindestens zwei Schichten des flexiblen Materials mit mindestens einem Klebstoff, um die mindestens zwei Schichten des flexiblen Materials destruktiv miteinander zu verbinden und um mindestens ein flexibles magnetisierbares Laminat zu bilden; und
nach dem Zusammenlaminieren der mindestens zwei Schichten aus flexiblem Material, Aushärten des mindestens einen Klebstoffs;
wobei der mindestens eine Klebstoff beständig gegenüber dem Übertragen von dem mindestens einen flexiblen, magnetisierbaren Laminat auf die Schneidklingen während des Schneidens des mindestens einen flexiblen, magnetisierbaren Laminats ist; und
wobei ein solches mindestens eine flexible magnetisierbare Laminat während der Verwendung gegen Delaminierung bei Einwirkung von direkter Sonneneinstrahlung beständig ist.

## Revendications

1. Système, relatif à la prévention de la déstratification de stratifiés magnétisables exposés à la lumière directe du soleil et relatif à la prévention de l'encrassement des lames de coupe durant la découpe desdits stratifiés magnétisables, ledit système comprenant :
au moins un stratifié magnétisable flexible comprenant au moins deux couches, lesdites au moins deux couches comprennent :
au moins une couche magnétisable structurée et agencée pour être capable de magnétisation,
au moins une couche inscriptible comprenant un papier synthétique ayant une épaisseur de 127 micromètres (5 mil), et
au moins un adhésif structuré et agencé pour coller de manière destructive lesdites au moins deux couches ensemble et étant résistant au transfert à partir dudit au moins un stratifié magnétisable flexible vers lesdites lames de coupe durant la découpe dudit au moins un stratifié magnétisable flexible ; dans lequel l'au moins un stratifié magnétisable flexible est résistant à la déstratification durant l'utilisation en exposition directe à la lumière du soleil.

2. Système selon la revendication 1, dans lequel ledit au moins un adhésif comprend au moins un adhésif durcissable à l'humidité structuré et agencé pour durcir à l'aide de l'humidité.

3. Système selon la revendication 1, dans lequel ledit au moins un adhésif comprend principalement du polyuréthane.

4. Système selon la revendication 1, dans lequel ledit au moins un adhésif comprend au moins 95% de prépolymère de polyuréthane.

5. Système selon la revendication 1, dans lequel ledit au moins un adhésif comprend au moins 95% de polyuréthane.

6. Système selon la revendication 1, dans lequel ledit au moins un adhésif comprend un point de fusion supérieur à 65 degrés Celsius.

7. Système selon la revendication 1, dans lequel ledit au moins un adhésif comprend principalement de l'éthylène-acétate de vinyle.

8. Système selon la revendication 1, dans lequel ledit au moins un adhésif présente une flexibilité à température ambiante.

9. Système selon la revendication 1, dans lequel ledit papier synthétique est un papier synthétique imperméable.

10. Système selon la revendication 1, dans lequel ledit au moins un adhésif est exempt de solvant.

11. Système selon la revendication 1, dans lequel ledit au moins un adhésif comprend au moins un adhésif thermofusible.

12. Système selon la revendication 11, dans lequel ledit au moins un adhésif comprend au moins un adhésif thermofusible réactif.

13. Système selon la revendication 12, dans lequel ledit au moins un adhésif comprend au moins un polymère thermodurci virtuel.

14. Procédé, relatif à la stratification de stratifiés magnétisables ayant au moins un adhésif empêchant la déstratification desdits stratifiés magnétisables exposés à la lumière directe du soleil et empêchant l'encrassement des lames de coupe durant la découpe desdits stratifiés magnétisables, ledit procédé comprenant les étapes de :
l'obtention d'au moins deux couches de matériau flexible, lesdites au moins deux couches comprenant :
au moins une couche magnétisable structurée et agencée pour être capable de magnétisation ; et
au moins une couche inscriptible comprenant un papier synthétique ayant une épaisseur de 127 micromètres (5 mil) ;
la stratification desdites au moins deux couches de matériau flexible avec au moins un adhésif pour coller de manière destructive lesdites au moins deux couches de matériau flexible ensemble et former au moins un stratifié magnétisable flexible ; et
après la stratification, desdites au moins deux couches de matériau flexible ensemble, le durcissement dudit au moins un adhésif ;
dans lequel ledit au moins un adhésif est résistant au transfert à partir dudit au moins un stratifié magnétisable flexible aux lames de coupe durant la découpe dudit au moins un stratifié magnétisable flexible ; et
dans lequel au moins un stratifié magnétisable flexible est résistant à la déstratification lors de l'exposition à la lumière directe du soleil, durant l'utilisation.
